# EUROPEAN PATENT APPLICATION

(11) **EP 4 089 342 A1**
(43) Date of publication of application: **16.11.2022**
(21) Application number: 22173029.4
(22) Date of filing: 12.05.2022
(51) Int. Cl.: F24F 13/06

(54) **CEILING AIR OUTLET WITH THERMAL CONTROL OF MODES**

(30) Priority: 13.05.2021 SK 500402021
(71) Applicant: Systemair Production a.s., 900 43 Kalinkovo (SK)
(72) Inventor: Mihal, Peter, 930 41 Hviezdoslavov (SK); Halász, Kristián, 931 01 Samorín (SK); Sroba, Peter, 900 41 Rovinka (SK); Ertl, Ondrej, 821 03 Bratislava (SK)
(74) Representative: Porubcan, Róbert

(57) **Abstract**

Ceiling air outlet, mainly large-volume ceiling outlet, has a first group (1) of openings for the outflow of the air downwards from the outlet and the second group (2) of openings for the outflow of the air at least to one side of the outlet. It further has a first regulation element (4) for the opening and closing of the outflow of the air from the first group (1) of the openings and the second regulation element (5) for the opening and closing of the outflow of the air from the second group (2) of openings. The first regulation element (4) and the second regulation element (5) are mechanically coupled for the contrary opening of the first group (1) of openings and closing of the second group (2) of openings and vice versa, whereby the output of the action member is connected with the first and second regulation element (4, 5) in such a way that the increase of the temperature of the action member (3) leads to opening of the first group (1) of openings. The action member (3) is a thermocapsule with the draw-out piston or the bimetallic element. Preferably, the first group (1) of openings is in the horizontal plate (6) and the second group (2) of openings is in the circumferential sheath (7).

## Description

### Field of technology

The invention concerns a ceiling air outlet design for outflow of an air to the room within the framework of ventilation and/or air conditioning and/or heating distribution, whereby the direction of the outflow of the air is directed pursuant to the temperature of the inflowing air without the need for manual control and without the need for electric control of the regimes or modes.

### Prior state of the art

Air outlets used for heating and cooling with adjustable mode of the air's outflow direction are known. What is required is that during winter operation the warm air flows out of the outlet downwards, whereby the buoyancy of the cool air in the room is dynamically overcome. During cooling in the summer operation, on the other hand, the air shall flow under ceiling, whereby it then descends downwards and the space is not locally overcooled by the outlet. In order to switch between two main modes some known solutions use manually controllable element, which, however, requires an intervention of the personnel for each outlet during the switching of summer and winter mode. Moreover, in the transitory period there can be multiple switches between heating and cooling. An electrically propelled and centrally controlled actuator, which would set the modes for multiple or all outlets of the respective ventilation system, can be used, too. Electric or electronic, respectively, control leads to complicated solution with many elements and wirings whose use is only occasional, but it still requires maintenance and control.

This deficiency is partially addressed by patent file SK 286768, which discloses a movable ring placed above the openings in the outlet board of the ceiling outlet. The ring rotates with help of temperature-sensitive expansion drive and it is lifted to the level of the outlet board, which directs the outflow of the air. In both modes, however, the air flows through the same group of openings in the outlet board, which decreases the effect of intended and different directioning of the warm and cool air.

Publication WO2018087283A1 discloses the use of temperature-dependent mechanical switching where changing state of the PCM substance or bimetallic member is used for opening or closure of the ventilation channel. This solution itself makes it necessary to use independent outlets for heating and for cooling, which is not efficient and which is too complicated.

Air outlet pursuant to GB2200443A uses a capsule with a wax, whereby the wax is a thermoactive member functioning as a local thermostat for regulation of the flow according to the set temperature. Only cool air is led to the outlet for cooling of the room. The higher the temperature in the room, the larger the outlet cross-section. Such arrangement cannot address the issue of changes in summer and winter mode. Solution pursuant to GB2277374, using bimetallic member for opening and closing of the outlet, cannot be used for this purpose either, for the similar reason.

Publication CA2065781 A1 discloses the use of a thermoactive member, for example bimetallic member, which rotates the throttle connected in one outflow direction. Such solution is a partial solution of local thermal regulation, but in case of an open throttle the air flows in both directions. The solution cannot be used for change of summer and winter mode. Similar deficiencies mar the solution pursuant to US 5476419, which has two groups of outflow openings in a single plane, whereby one of the groups is equipped by controllable shades.

Such constructionally simply and spatially compact solution of the ceiling outlet with the switching of modes is desired and not known, which will not require manual operation or electric control, and which will, at the same time, effectively change the direction of the air's outflow from the outlet.

### Essence of the invention

The invention is defined by claims 1 to 15. The deficiencies in the prior art are significantly remedied by the ceiling air outlet with the thermal control of modes for the directioning of the outflow of an air, which includes openings for the outflow of air and an action member activated by the change of temperature with the mechanical output, whereby the position of the output of the action member is dependent on the temperature of the air led to the outlet, according to this invention, which essence lies in the fact that includes a first group of openings for the outflow of the air downwards from the outlet and the second group of openings for the outflow of the air upwards at least to one side of the outlet; where the outlet includes a first regulation element for the opening and closing of the outflow of the air from the first group of openings and second regulation element for the opening and closing of the outflow of the air from second first group of openings, whereby the first regulation element and the second regulation element are mechanically coupled for contrary opening of the first group of openings and closing of the second group and vice versa, and whereby the output of the action member is connected with the first and second regulation element in such a way that the increase of the temperature of the action element leads to opening of the first group of openings and closing of the second group of openings.

The term "outlet" in this file denotes any output device, outlet or similar element which is designed for an outflow of an air or other gas into an environment. The ceiling outlet is primarily designed to be mounted in ceiling construction, mainly on the horizontal ceiling.

An important feature of the proposed invention is the non-electric control of the changes in the outflow of the air from two groups of openings, whereby the change of the temperature of the air led to the outlet is used in order to control the changes in the modes. The air led to the outlet determines the temperature of the action member. The action member can be, for example, the thermocapsule or bimetallic element, whereby the temperature during which the position of the output of the action member changes shall be between the temperature of the warm air during heating and the temperature of the cool air during cooling. Thanks to this the air itself, flowing in the ventilation system, is used as a carrier of information concerning the desired mode of the ceiling outlet. This offers the advantages in the arrangement where the outlet is connected to the ventilation distribution, whereby it is distanced from the other elements of the ventilation system controlled by the electric members. The air outlet does not require neither mechanical nor electric nor other similar connection with other elements of the ventilation system and it can be controlled for the change between summer and winter mode.

During the change of mode from heating to cooling or vice versa - from cooling to heating - the active member behaves as an element which reads the information concerning the desired mode of the outlet from the temperature and the action member reacts to the changed temperature by changing the position of its mechanical output. Pursuant to the type of the action member the change of position can manifest itself by a shift of linear output or rotation of rotational output. The linear output will be typical, for example, for thermocapsules operating on the basis of expansion of the substance inside the capsule, or on the basis of change of state of the substance inside the capsule. The rotational output will be typical, for example for bimetallic elements.

An important feature of the proposed invention is the creation of independent group of openings for each mode of outflow. An invention is known in the prior art where the air flew out from the same group of openings in both regimes but with differently directed vanes and rings. The proposed invention uses the first group of openings for the output of the air downwards from the outlet, whereby this group is oriented in such a way that the air is led to the outlet and directly directed downwards. Usually, the first group of openings is mounted in the horizontally placed ceiling outlet from which the air flows basically perpendicularly onto the surface of the plate. It is preferable if the second group is mounted on the surface which is basically vertical, so that the air flowing from the second group of openings moves in the horizontal plane during the outflow.

The second group of openings can be placed in one side of the outlet, for example, if the outlet is designed to be mounted in the corner of the room, or, preferably, the second group of openings is placed alongside the whole circumference of the outlet where the air flows radially to the sides. Since both first and second group of openings is independent, they can be optimally designed for a single direction of the flow of the air.

The first regulation element is designed for opening and closing of the openings of the first group; the second regulation element is designed for contrary opening and closing of the openings of the second group.

In the preferable arrangement the ceiling outlet according to this invention has a body protruding from the ceiling inside the room, whereby on the outer side the body is composed of a front plate and the circumferential sheath where the front plate closes the circumferential sheath and the front plate is equipped by the openings of the first group. The second is placed on the sheath. The shape of the front plate and thereby the groundplan cross-section of the ceiling outlet, too, can vary; it can be, for example, rectangular, hexagonal, octagonal, polygonal or, preferably, circular. Given the circular shape of the front plate, the ceiling outlet has cylindrical shape which simplifies the construction of the regulation elements.

The first regulation element can include rotationally placed flat shade (or shield) which is placed adjacently by the inner side of the front plate and during the closing it covers the openings of the first group. The shade's shape corresponds to the shape of the openings in the front plate; in the closed position all openings are completely or at least significantly covered by the flat shade. The second regulation element can operate on the principle of the moving shade. Given the cylindrical sheath with alternately distributed openings of the second group, the openings can be preferably shielded by the ring whose openings correspond to the open position of the openings of the second group. The openings of the second group are gradually completely closed by the full part of the ring by the means of the rotation of the ring.

Given the cylindrical shape of the outer body of the ceiling outlet the flat shade for regulation of the openings of the first group and the ring for regulation of the openings of the second group are simply mechanically coupled by means of a draw rod or a spring or by connection into a single whole of a rotor, and so on. At the same time, the openings of the first and second group are mutually oriented against the flat shade and ring in such a way that the opening and closing of the openings is contrary. During the change of the mode the regulation cross-sections of the openings of the first and second group are altered gradually, which is preferable, since it prevents the sudden dynamic changes in the system. A process would have been similarly undesired, where both groups were firstly completely closed and only then the desired group of the openings were open, which would have caused dynamic blows in the ventilation system.

The first and/or the second regulation element will be mechanically connected with the action member in such a way that the difference in the end positions of the output of the action member ensures the complete closure or complete opening of the openings of the both groups. Pursuant to the difference between end positions of the output of the particular action member, and given the temperatures of the led cool and warm air, the mechanism of the gear with the respective kinematics is chosen. An arrangement proved preferable where the action member is a thermocapsule and the mechanical output of the thermocapsule is a piston which is pushed outside with the increase in temperature. The distance of the end positions of the piston is thermocapsule is relatively small and therefore it is preferable to use a gear which could include a pulley, a crank, a lever or a scissor mechanism or a single groove Geneva drive.

It is preferably if the proposed invention is used in a construction of a large-volume ceiling outlet. The large-volume ceiling outlet is designed mainly for installation in larger rooms, halls, public spaces. In such case the outlet is placed much higher which makes the manual switching of the modes more difficult and the distance between the outlet and the control center is too big so that creation of wiring for switching the modes by means of an actuator is expensive and it would require a regular check and maintenance.

In case of the large-volume outlet the connecting body usually has a circular groundplan which follows upon the circular air distribution. In order to achieve sufficient cross-section of the openings of the first and the second group, the diameter of the circular sheath following the connecting body is more than the diameter of the connecting body itself. The circular sheath is placed under the ceiling inside the room and on its circumference there are openings of the second group distributed on the circular sheath. The increase of the length of the sheath can produce a sufficient surface for the placement of the openings of the second group. The sheath is ended by the flat plate which forms the front of the outlet. The first group of openings is placed on the plate. In order to achieve a sufficient outflow cross-section of the openings on the plate while, at the same time, it is not necessary to unduly increase the diameter of the plate and thereby the diameter of the sheath, too, relative to the diameter of the air distribution, the shade for the first group of openings can be produced as foldable. With the simple unfoldable shade it approximately holds that the openings can be produced on the plate in such a way that their overall cross-section is ca. 50% of the available surface on the pate. If the shade is foldable, then, given the open openings, it is folded in layers on top of each other and the openings can occupy a larger part of the plate's surface. For example, if the shade is composed of two parts which move fanlike in two mutually adjacent planes, the overall surface of the openings can reach approximately % of the available surface of the plate. The shade folded on itself occupies approximately ⅓ of the groundplan and after it is spread it can cover 2 × ⅓ of the plate's surface. These data concerning surfaces are approximate, since in order to ensure the solidity and strength of the plate and the shade, it is necessary to produce reinforcing elements on them.

The invention separates the flow of the air from the outlet in different directions during heating and cooling modes, whereby in order to change the direction the temperature change of the air that is led in is used. The solution is operationally simple and reliable, it requires neither manual operation nor electric control. The invention is suitable for the outlets of various shapes, types and sizes, but mainly for large-volume ceiling outlets, whereby high flow cross-sections are achieved already given the small body of the outlet.

### Description of drawings

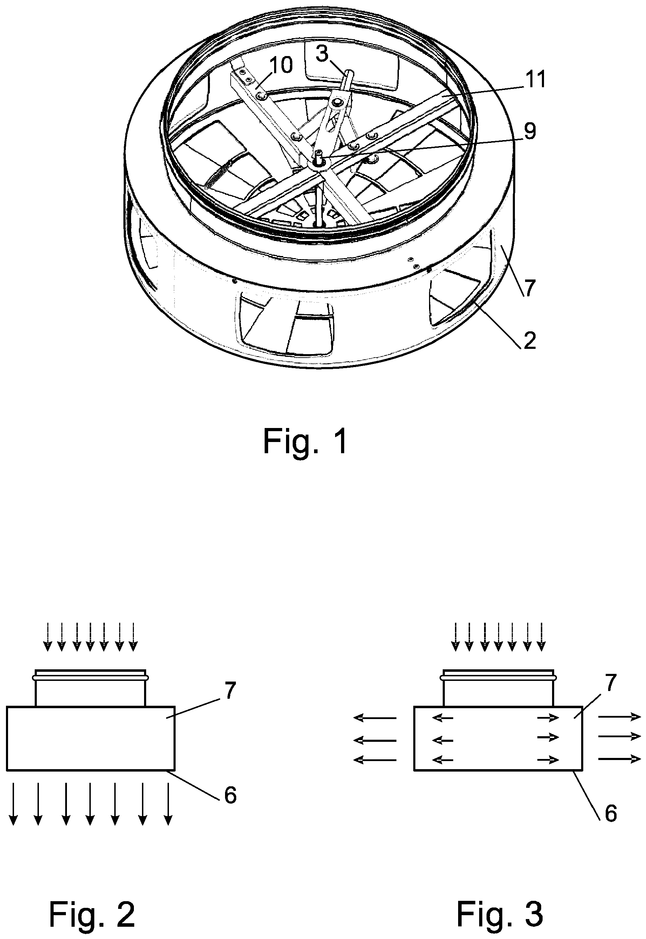

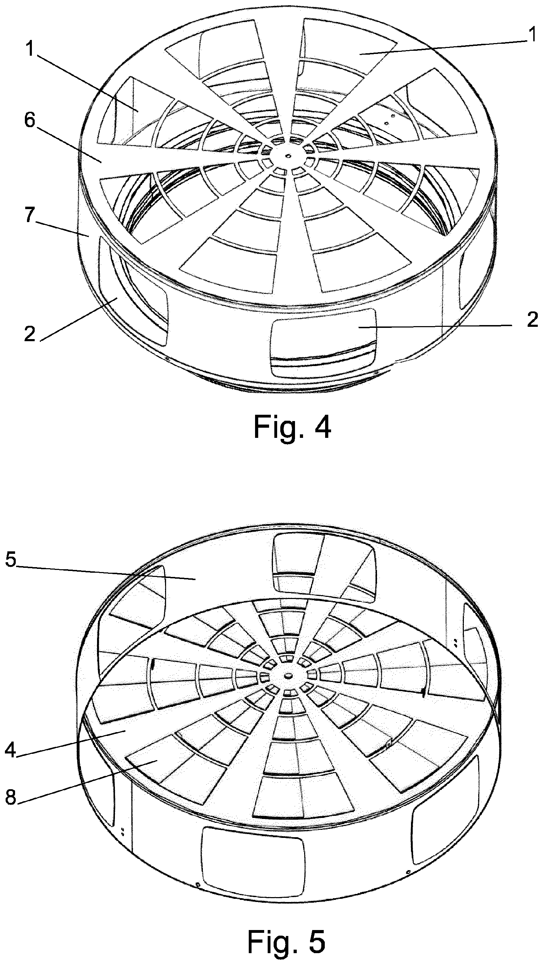

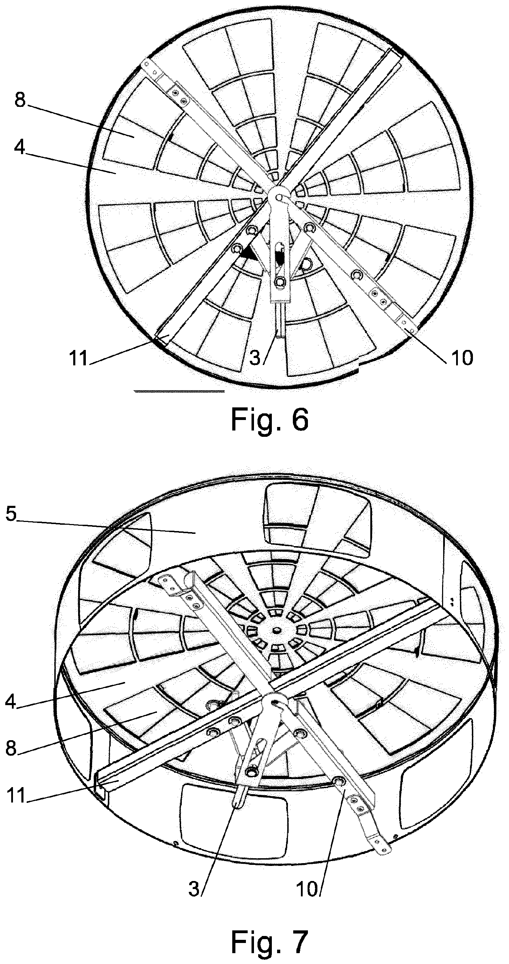

The invention is further disclosed by means of figures 1 to 9. The used scale of depictions, the shape of the openings, the size and the type of an action member, as well as depicted positions of the regulation elements, need not correspond to the description in examples, and these depicted details cannot be interpreted as limiting the scope of protection.
Figure 1 is a spatial view of the outlet from the side of connection of the air distribution, where one can partially see the inner arrangement with the regulation elements.
Figure 2 is a side view of schematically depicted outlet with open openings of the first group, whereby the led warm air flows downwards.
Figure 3 is a side view of schematically depicted outlet with open openings of the second group, where the led cool air flows radially by the outlet's side under the ceiling. The dashed arrows in figures 2 and 3 depict the intake of air into the outlet through the respective air distribution.
Figure 4 spatially depicts the sheath and the front plate of the outlet without the inner parts with only central guiding shaft mounted. The view is directed on the bottom side with the first group of openings.
Figure 5 depicts the regulation elements of the first and second group of openings in form of a rotor and a shade, which are place inside the outlet's body.
Figure 6 is a groundplan view of the action member and the regulation elements without the depiction of the outer body of the outlet.
Figure 7 is an axonometric view of the regulation elements and the action member without the depiction of the sheath and the front plate.
Figure 8 depicts the action member with the scissor mechanism which transfers the linear movement of the piston onto the rotation of the rotor which carries both regulation elements. The edges of the partition are designed for the connection to the outlet's body and the edges of the central reinforcement are designed for carrying the circumferential shade.

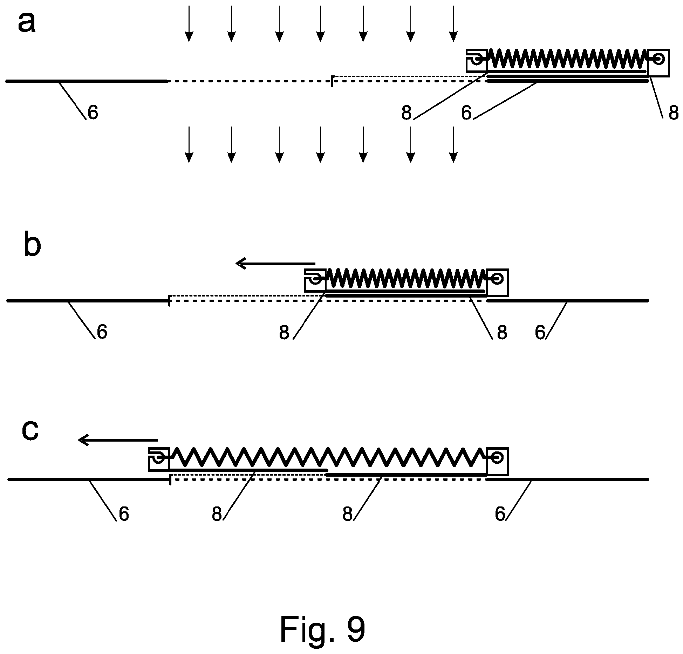

Figure 9 depicts the positions of the foldable shade in the simplified side cross-section by its outer circumference. In part "a" the shade is completely open, whereby both parts are covered and they are above the solid part of the plate, that is, outside the plate's opening, which is depicted by the dashed line. The arrows depict the transfer of the air through the uncovered opening in the plate. Part "b" depicts the process of the closing of the shade, where the horizontal arrow depicts the force pulling both parts of the shade into the position above the opening in the plate. In the position pursuant to "b" the lower part of the shade is drawn by the spring, whereby the stop of the lower part of the shade just leans onto the edge of the opening in the plate. The stop is connected with the lower part of the shade by the dashed line in the level of the lower part of the shade. Subsequent further pulling of the upper part of the shade leads only to the movement in this upper part of the shade; the spring is stretched and it keeps the lower part of the shade in the position delimited by the stop. This is depicted on the figure 9 c, where the shade is completely rolled out above the opening in the plate and thereby the opening is closed.

### Examples of realization

### Example 1

In this example according to figures 1 to 9 the outlet has a connecting body with the circular cross-section; the connecting body has a circumferential hollow (groove) in which the rubber sealing is placed. The connecting body is inserted in the mouth of the pipe of the air distribution which leads in the air from the distant source. This source provides the air with the desired temperature pursuant to the set regulation and summer/winter mode.

An annulus is fixedly connected to the connecting body from the outer side, whereby the cylindrical outer sheath 7 follows downwards from the annulus. The openings of the second group 2 are regularly distributed in on the sheath 7. In this example it is six openings with approximately rectangular cross-section, where the shape of each opening is the same and it has rounded edges and the individual sides of the rectangle are moderately rounded, too. The flat plate 6 is mounted onto the bottom part of the sheath 7 and first group of openings 1 is in the flat plate 6. In this example of realization, the openings of the first group 1 are produced as fanlike distributed beams with regular angular pitch, whereby eight beams are used in total, which are widening in the direction from the center to the edge. Each beam has circularly shaped reinforcing bridges which have a common center of curvature in the center of the circular plate 6.

In the center of the circular plate 6 there is perpendicularly attached central guiding shaft 9 which is on the opposite end anchored in the partition 10. The partition 10 is attached to the annulus which connects the connecting body and the outer sheath 7. The guiding shaft 9 is in this arrangement led in the plate 6 on the one end and in the partition 10 on the second end, which creates reliable and sufficiently solid guidance (or wiring). Rotationally placed rotor is mounted in the central guiding shaft 9, whereby the rotor is composed of the circular front and from the ring. The circular front forms fanlike shades 8 which fulfill the function of the first regulation element 4. The ring is a second regulation element 5 and it is adjacently connected to the inner side of the sheath 7. The ring and the fanlike shades 8 are, in this way, placed inside the body of the outlet.

There are openings in the ring whose size, shape and position correspond to the second group of openings 2 in the sheath 7. There is a small gap between the ring and the inner side of the sheath 7 which is sufficient for the free rotation of the ring inside the sheath 7. The rotor has a central reinforcement 11 which is placed inside the guiding shaft 9, whereby the central reinforcement 11 in this example of realization runs through the opening in the partition 10. The central reinforcement 11 is during the mounting passed through the opening in the partition 10, whereby the partition 10 is solid, fixed, immovable against the body of the outlet. The opening in the partition 10 is large enough for rotation of the central reinforcement 11 against the partition 10 in the angular scope sufficient for the rotation of the rotor between the limit (extreme) positions of the regulation of the first and second regulation element 4, 5.

In one of the limit (extreme) positions the openings in the ring completely overlap with the openings of the second group 2 in the sheath 7 which corresponds to the complete opening of the outflow of the cool air, that is, to the summer mode. In this limit (extreme) position the fanlike shades 8 overlap with the openings in the first group 1 on the plate 6. In this example, thus, the mechanical coupling of the opening of the first group of openings 1 and simultaneous closing of the second group of openings 2 is achieved by the solid connection of the ring and the front into a one whole of the rotor.

In this example of realization, the shade 8 is construed as foldable (as if telescopic, composed of two groups of fans), so that the available surface of the plate 6 is used more effectively for the openings of the first group 1. Between the front of the rotor and the inner surface of the plate 6 there is the second part of the flat shade 8 which is fanlike, too, and which is rotationally mounted on the guiding shaft 9. The second part of the flat shade 8 is formed by the disc which is rotationally mounted on the shaft 9. Gradual rotation of both parts of the shade 8 is achieved by means of two springs which in the places on the circumference connect the front of the rotor and the second part of the shade 8. The springs in one direction draw the neighboring fanlike part of the shade 8. In this example the gear of the action member 3 is led to the rotor, that is, to the top surface of the shade 8, and the bottom part of the shade 8 is connected with the rotor by means of springs pursuant to figure 9. When the top part of the shade 8 is pulled into the opening of the plate, both parts of the shade 8 firstly move simultaneously. In the intermediate position when the bottom part of the shade 8 is fully above the opening in the plate, the stop leans into the edge of the opening in the plate 6 and subsequently the bottom part of the shade 8 does not move; only the top part of the shade 8 is further pulled until the complete closing of the opening. The stop of the bottom part of the shade 8 is preferably produced on the outer circumference in form of a bent thumb protruding from the disc, which in a single body combines all fans of the bottom part of the shade 8.

Individual parts of the shade 8 - in this example, top and bottom layer of the shade 8 - are in the open position folded one above another in layers into the cover outside the opening in the circular plate 6. During the closing of the shade 8 these move out of the cover and gradually they cover the openings in the circular plate 6; in the closed position the individual parts of the plate 8 are side by side and thereby they cover the whole window of the respective opening.

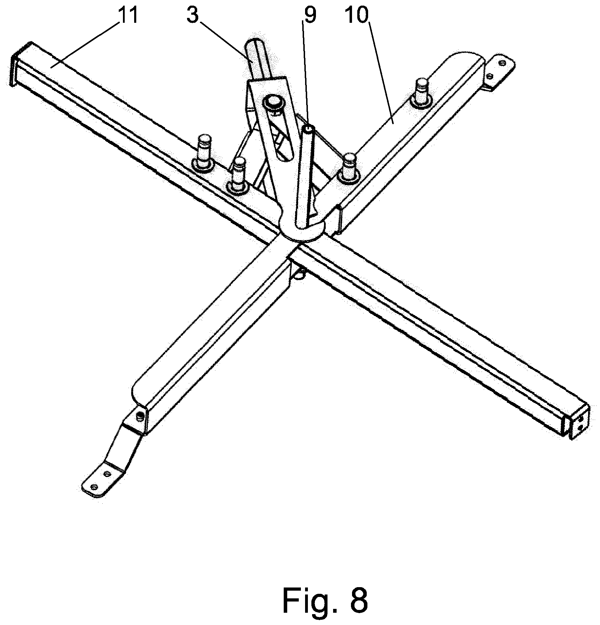

During the complete opening of the first group of openings 1 the openings of the second group 2 are covered by the full part of the ring and vice versa. An action member 3 serves the purpose of movement of the rotor pursuant to the temperature of the air inside the outlet, whereby in this example the action member 3 is a thermocapsule with a piston. The piston is activated by the changes in the temperature in the scope corresponding to the heating or cooling air. In order to achieve sufficient transmission ration between relatively short movement of the piston and the rotation of the rotor, a scissor is used in this example. The action member 3 is mounted in the holder which is in the upper part of the outlet mounted onto the guiding shaft 9, whereby the thermal transmission surface of the thermocapsule is, without the cover, fully available for the contact with the intaken air. A pair of expanding arms is connected to the piston of the action member 3 by the stud, whereby the stud is at the same time led in the longitudinal grooves of the holder. One expanding arm is connected by the pin to the to the partition 10 and the second expanding arm is connected through the pin to the central reinforcement 11 of the rotor. During the increase of the temperature inside the outlet the piston is pushed from the action member 3 by which the expanding arms unfolded, open and distanced, and the central reinforcement 11 is rotated by the pressure from the expanding arms into the position of opening of the first group of openings 1. A draw spring acts in the opposite direction, whereby the spring connects the solid partition 10 and the central reinforcement of the rotor 11 (for the sake of clarity, the draw springs is not depicted; the pins are visible on the figure 8 and the draw spring is to be mounted in the pins).

In the summer mode, when the cool air is led into the outlet, the draw spring presses the expanding arms together, the piston of the action members 3 is pulled inside the thermocapsule and the second group of openings 2 is open.

In this arrangement the outer surface is effectively used for creation of respective groups of openings. The action member 3 is well available for contact with the intaken air.

### Example 2

In this example the action member 3 has a form of a bimetallic strip which is inside the outlet connected to the lever. The lever controls the first and second regulation element 4, 5 in the contrary direction.

### Industrial applicability

The industrial applicability is obvious. Pursuant to this invention it is possible to industrially and repeatedly produce and use ceiling air outlet with the control of the modes pursuant to the temperature of the intaken air.

### List of symbols

1- first group of openings
2- second group of openings
3- action member
4- first regulation element
5- second regulation element
6- plate
7- sheath
8-shade
9- guiding shaft
10- partition
11-central reinforcement

## Claims

1. A ceiling air outlet with a thermal control of modes for a directioning of an outflow of an air, which is designed for a connection to an air distribution and which includes
a first group (1) of openings for the outflow of the air downwards from the outlet and a second group (2) of openings for the outflow of the air at least to one side of the outlet,
an action member (3) activated by a change of a temperature with a mechanical output, where the position of the output of the action member (3) is dependent on the temperature of the air led into the outlet,
is **characterized by** the fact, that
it includes a first regulation element (4) for an opening and a closing of the outflow of the air from the first group (1) of the openings and a second regulation element (5) for the opening and the closing of the second group (2) of the openings,
whereby the first regulation element (4) and the second regulation element (5) are mechanically coupled for the contrary opening of the first group (1) of the openings and the closing of the second group (2) and vice versa,
and whereby the output of the action member (3) is coupled with the first and the second regulation element (4, 5) in order to open the openings of the first group (1) and to close the openings of the second group (2) during the increase of the temperature of the action member (3).

2. The ceiling air outlet with the thermal control of the modes pursuant to the claim 1, where the action member (3) is a thermocapsule with a draw-out piston.

3. The ceiling air outlet with the thermal control of the modes pursuant to the claim 1, where the action member (3) is a bimetallic element.

4. The ceiling air outlet with the thermal control of the modes pursuant to any of the claims 1 to 3, where an operative range of the temperatures of the action member (3) lies at least partially between temperature corresponding to temperature of the air during cooling and temperature corresponding to temperature of the air during heating.

5. The ceiling air outlet with the thermal control of the modes pursuant to any of the claims 1 to 4, where the outlet has a circumferential sheath (7) and a horizontal plate (6) which closes the sheath (7) from a bottom, whereby the circumferential sheath (7) with the plate (6) are designed for a placement under the ceiling inside a room, and where the first group (1) of the openings is on the plate (6) and the second group (2) of the openings is on the circumferential sheath (7).

6. The ceiling air outlet with the thermal control of the modes pursuant to any of the claims 1 to 5, where the second group (2) of the openings is formed on one side of the outlet or, preferably, the second group (2) of the openings is placed on a whole side circumference of the outlet.

7. The ceiling air outlet with the thermal control of the modes pursuant to any of the claims 1 to 6, where a groundplan cross-section of the sheath (7) and/or a groundplan shape of the plate (6) is rectangular or hexagonal or octagonal or polygonal or circular.

8. The ceiling air outlet with the thermal control of the modes pursuant to any of the claims 5 to 7, where the first regulation element (4) has a rotationally mounted flat shade (8) which is adjacently placed to an inner side of the plate (6) for a shielding of a cross-section of the first group (1) of the openings.

9. The ceiling air outlet with the thermal control of the modes pursuant to any of the claims 5 to 8, where the second regulation element (5) has a ring which is rotationally mounted and adjacently placed to an inner side of the sheath (7), and in the ring there are openings whose position, size and shape correspond to the second group (2) of the openings in the sheath (7).

10. The ceiling air outlet with the thermal control of the modes pursuant to any of the claims 5 to 9, where the first regulation element (4) and the second regulation element (5) are connected into a single whole of a rotor.

11. The ceiling air outlet with the thermal control of the modes pursuant to any of the claims 1 to 10, where the first regulation element (4) includes the divided shade (8) composed at least from two parts which move, and preferably rotate, in adjacent planes above each other.

12. The ceiling air outlet with the thermal control of the modes pursuant to the claim 11, where the divided shade (8) includes a disc connected with the shade (8) by means of at least one spring, whereby the disc is equipped by a stop for setting a position in the closed position and the disc is between a top layer of the shade (8) and an inner surface of the plate (6).

13. The ceiling air outlet with the thermal control of the modes pursuant to any of the claims 10 to 12, where the rotor is rotationally mounted on a guiding shaft (9); the guiding shaft (9) is connected to the plate (6) and on an opposite end it is connected to a partition (10) which is fixedly connected with a body of the outlet; the rotor has a central reinforcement (11), in the central reinforcement (11) there is an opening through which the partition (10) passes or in the partition (10) there is an opening through which the central reinforcement (11) passes; a holder with the thermocapsule with the piston is connected to the guiding shaft (9); the piston is connected to a pair of expanding arms through a stud, where the stud is at the same time led in at least one longitudinal groove in the holder, whereby one expanding arm is connected to the partition (10) and the second expanding arm is connected to the central reinforcement (11).

14. The ceiling air outlet with the thermal control of the modes pursuant to the claim 13, where the partition (10) and the central reinforcement (11) are on a side of a placement of the thermocapsule connected by a draw spring.

15. The ceiling air outlet with the thermal control of the modes pursuant to any of the claims 1 to 14, where the first group (1) of the openings and the shade (8) have a fanlike shape, preferably with circularly led connecting bridges.
